# NEUE EUROPÄISCHE PATENTSCHRIFT

(11) **EP 1 151 652 B2**
(45) Veröffentlichungstag und Bekanntmachung des Hinweises auf die Entscheidung über den Einspruch: **20.06.2012**
(45) Hinweis auf die Patenterteilung: 13.06.2007
(21) Anmeldenummer: 01108273.2
(22) Anmeldetag: 02.04.2001
(51) Int. Cl.: A01D 43/08

(54) **Erntemaschine, insbesondere selbstfahrender Feldhäcksler**
Harvester especially self-propelled forage harvester
Récolteuse en particulier faucheuse-hacheuse

(30) Priorität: 04.05.2000 DE 10021664
(43) Veröffentlichungstag der Anmeldung: 07.11.2001
(73) Patentinhaber: Maschinenfabrik Bernard Krone GmbH, 48480 Spelle (DE)
(72) Erfinder: Krone, Bernard, Dr. Ing. E.h., 48480 Spelle (DE); Horstmann, Josef, Dr. Ing., 49479 Ibbenbüren (DE); Schniederbruns, Bernhard, 49835 Wietmarschen (DE)
(74) Vertreter: Busse & Busse

(56) Entgegenhaltungen:
- EP-A- 0 672 339
- DE-A1- 4 403 893
- US-A- 5 575 316

## Beschreibung

Die Erfindung bezieht sich auf eine Erntemaschine, insbesondere enen selbstfahrenden Feldhäcksler zum Aufnehmen und Häckseln von Mais, Anwelkgras, Grünfutter und dergleichen Erntegut, mit einem Einzugs- und Häckseleinrichtungen nachgeordneten, motorisch verschwenbaren Auswurfkrümmer zur Übergabe des Erntegutes in einen Laderaum eines Begleitfahrzeuges.

Erntemaschinen der vorgenannten Art sind bekannt. Sind sie als Feldhäcksler ausgebildet, übergeben sie während der Erntefahrt das Erntegut über den Auswurfkrümmer in den Laderaum eines neben dem Feldhäcksler fahrenden Begleitfahrzeuges, das einen Abstand und eine Positionierung zum Feldhäcksler einzunehmen hat, um bei positioniertem Auswurfkrümmer möglichst ohne Verlust von Erntegut das Erntegut sicher in den Laderaum zu übergeben. Beim Wechsel der Fahrtrichtung des Feldhäckslers auf einem Vorgewende ergeben sich jedoch zeitaufwendige Neupositionierungsarbeiten zur exakten Einstellung des Auswurfkrümmers, da bei entgegengesetzter Fahrtrichtung das Begleitfahrzeug auf den schon abgeernteten Bereichen des Feldes zu fahren hat und somit der Auswurfkrümmer in die diesem abgeernteten Bereich des Feldes zugewandte Betriebsstellung zu überführen ist.

Aus der US-A-5,575,316 ist eine Anordnung offenbart, bei der über einen Entfernungsmesser beim Beladen eines Transportfahrzeuges durch einen Auswurfkrümmer eines Feldhäckslers die Abmessungen des Transportfahrzeuges ermittelt werden. Aus diesen Werten wird die Position des Auswurfkrümmers von einer Regeleinrichtung gesteuert. Die entsprechenden Entfernungsmesser sind dazu an geeigneten Stellen des Auswurfkrümmers angebracht und erkennen in Längs- und Querrichtung z.B. die Höhe von Begrenzungswänden des Transportfahrzeuges, so daß dann durch einen Vergleich der aktuellen Füllhöhen des eingefüllten Gutes mit der Höhe der Begrenzungswände des Ladebehälters des Transportfahrzeuges der Füllgrad ermittelt werden kann. In Abhängigkeit vom Füllgrad erfolgt eine gesteuerte Verschwenkung des Auswurfkrümmers um eine horizontale und/oder vertikale Schwenkachse oder auch eine Verschwenkung der Auswurfklappe des Auswurfkrümmers mit dem Ziel, eine Futterverluste vermeidende Beladung des Transportfahrzeuges zu erzielen. Damit ist jedoch eine exakte Neupositionierung des Auswurfkrümmers nach einem Wechsel der Fahrtrichtung auf einem Vorgewende nicht zu vollziehen.

Es ist Aufgabe der vorliegenden Erfindung, eine Erntemaschine der eingangs genannten Art zu schaffen, bei der zeitaufwendige Positionierarbeiten nach einem Fahrtrichtungswechsel zu vereinfachen sind.

Zur Lösung dieser Aufgabe zeichnet sich die Erntemaschine der eingangs genannten Art durch die im Patentanspruch 1 angegebenen Merkmale aus. Hinsichtlich wesentlicher weiterer Ausgestaltungen wird auf die Ansprüche 2 bis 6 verwiesen.

Damit ist es bei der Erntemaschine nach der Erfindung ermöglicht, bei Fahrtrichtungswechsel den Auswurfkrümmer automatisch in eine vorprogrammierbare, spiegelbildliche Position über die Steuervorrichtung zu überführen, so daß bei abgesprochener Positionierung des Begleitfahrzeuges und des Feldhäckslers nach einem Fahrtrichtungswechsel z.B. exakt die Positionierung des Auswurfkrümmers einzunehmen ist, die vor dem Fahrtrichtungswechsel vorgelegen hat. Dazu bedarf es keiner manuellen zeitaufwendigen Neupositionierung des Auswurfkrümmers durch die Bedienperson des Feldhäckslers. Der damit einhergehende Zeitvorteil ist während der Erntefahrt auf einem Feld erheblich. Darüber hinaus werden Positionierungsfehler wirksam verringert, so daß die Bedienperson nach Wenden der Erntemaschine sehr schnell seine Erntefahrt wiederaufnehmen kann. Die motorische Verschwenkung kann durch bekannte Antriebe wie Stellmotoren, Hydraulikeinheiten, Klinkenschaltwerke und dergleichen mechanische Antriebe erfolgen.

Die zur Steuerung notwendigen Teile der Steuervorrichtung bauen relativ einfach. So kann auf einem Drehkranz des Auswurfkrümmers zunächst eine Markierung für eine Nullpunktlage vorgesehen sein, die von einem optischen Sensor zu erkennen ist, der ein Signal an die Steuerungseinrichtung weiterleitet. Über einen Näherungsschalter, aber auch zum Beispiel über ein mit dem Drehkranz des Auswurfkrümmer kämmendes Zahnrad, ist das Winkelmaß von der ersten Betriebsstellung heraus bishin zur Nullpunktlage mit einfachen baulichen Teilen zu ermitteln, so daß zur Einnahme der gespiegelten ersten Betriebsstellung (2. Betriebsstellung) dann von der Steuereinheit nur noch das Winkelmaß, das durchfahren wurde bis zum Erreichen der Nullpunktstellung, zu addieren ist, um den Auswurfkrümmer in der zweiten Betriebsstellung zu positionieren. Die Winkelmessung muß allerdings nicht zwingend digital erfolgen. Darüber hinaus können auch analoge Sensoren Einsatz finden. Auch inkremental kann die Winkelmessung erfolgen. Weitere Automatikfunktionen können über die Teile zur Winkelmessung realisiert werden.

Weitere Einzelheiten und Vorteile der Erfindung ergeben sich aus weiteren Unteransprüchen, der nachfolgenden Beschreibung und der Zeichnung.

In der Zeichnung zeigen:
- Fig. 1: eine schematische Draufsicht auf einen Feldhäcksler mit Begleitfahrzeug während der Erntearbeit,
- Fig. 2: ausschnittsweise in schematischer Draufsicht den sich an einen Drehkranzantrieb anschließenden Bereich eines Auswurfkrümmers,
- Fig. 3: ausschnittsweise ein alternatives Ausführungsbeispiel zu dem Ausführungsbeispiel nach Fig. 2 in einer schematischen perspektivischen Darstellung schräg von oben auf den Antriebsbereich des Auswurfkrümmers;
- Fig. 4: eine zu Fig. 2 analoge Darstellung eines alternativen Ausführungsbeispiels,
- Fig. 5: eine zu Fig. 3 analoge Darstellung eines alternativen Ausführungsbeispiels und
- Fig. 6: ein beschriftetes Blockschaltbild für die Steuerung eines Ausführungsbeispiels einer Steuereinheit für eine Erntemaschine nach der Erfindung.

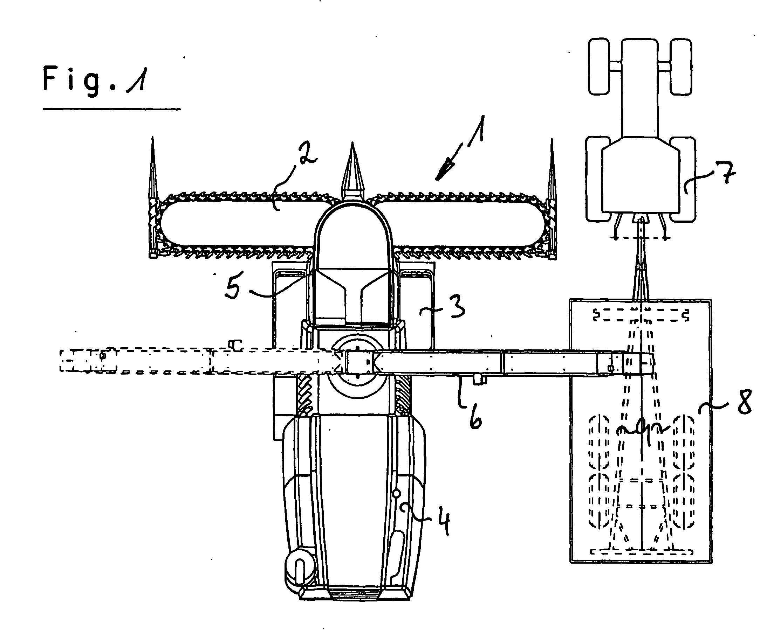

Die in der Zeichnung allgemein mit 1 bezifferte Erntemaschine ist als selbstfahrender Feldhäcksler ausgebildet und hat als Vorsatzgerät ein Maisgebiß 2, ein Fahrgestell 3, von einem Gehäuse 4 abgedeckte feldhäckslertypische Einheiten wie Motor- und Getriebeeinheiten, Einzugsorgane und Häckseleinrichtungen, eine Fahrerkabine 5 sowie einen motorisch verschwenkbaren Auswurfkrümmer 6. In der Fig. 1 dargestellt ist noch ein landwirtschaftlicher Schlepper 7, der einen Hänger 8 zieht, in dessen Laderaum 9 der Auswurfkrümmer das Erntegut zu übergeben hat. Um auch bei Wechsel der Fahrtrichtung des Feldhäckslers 1 und des Gespanns aus landwirtschaftlichem Schlepper 7 und Hänger 8 den Auswurfkrümmer 6 wieder exakt positionieren zu können, ist der motorische Schwenkantrieb des Auswurfkrümmers 6 mit einer Steuereinheit verbunden, die den Auswurfkrümmer 6 aus der in Fig. 1 mit Volllinien markierten ersten Betriebsstellung, in die der vertikalen Längsmittelebene des Feldhäckslers 1 gespiegelte ersten Betriebsstellung überführt, die der zweiten Betriebsstellung entspricht, wie sie gestrichelt in Fig. 1 dargestellt ist.

Damit lassen sich die Positionierarbeiten nach einem Fahrtrichtungswechsel sowohl des Feldhäckslers 1 als auch des landwirtschaftlichen Schleppers 7 sehr vereinfachen, indem der Schlepperfahrer nur noch die abgesprochene Position zum Feldhäcksler hin einnehmen muß, der Auswurfkrümmer 6 jedoch automatisch über den motorischen Antrieb und die mit ihm gekoppelte Steuereinrichtung die bei der letzten Erntefahrt vorgesehene Winkelauswurfstellung einnimmt.

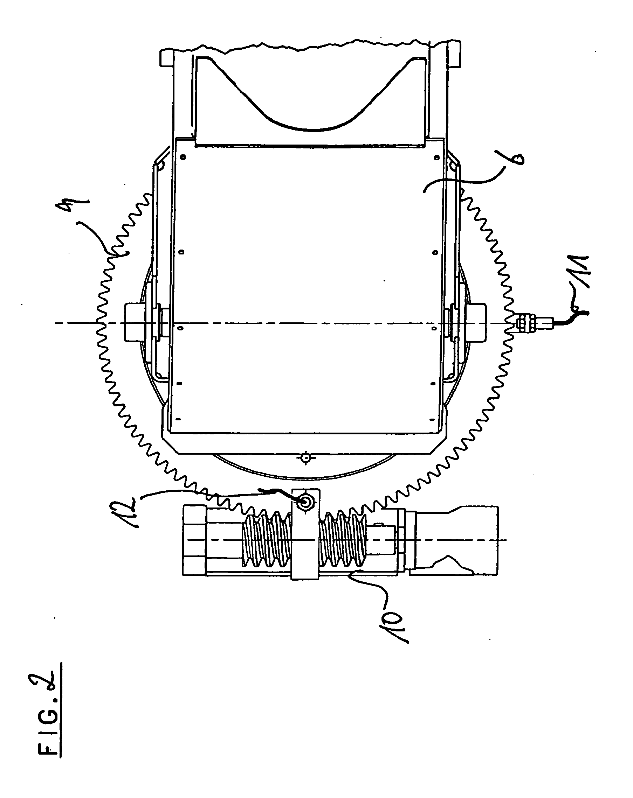

Dazu weist das Ausführungsbeispiel nach Fig. 2, bei dem der Auswurfkrümmer 6 über einen Drehkranz 9 und einen Spindelantrieb 10 angetrieben ist, einen Näherungsschalter 11, sowie einen optischen Sensor 12 auf. Der Näherungsschalter 11 ermittelt die im Verlaufe einer Schwenkbewegung des Drehkranzes 9 an ihm vorbeifahrenden Zähne des Drehkranzes 9. Der Sensor 12 kontrolliert den Drehkranz 9 auf die auf dem Drehkranz 9 vorgesehene Nullagemarkierung, so daß die Steuereinheit ein Steuersignal erhält, sobald im Verlaufe einer Verschwenkbewegung die Nullage erreicht ist. Danach wird die bis zum Empfang des Nullagensignals zurückgelegte Wegstrecke aufgrund der erfaßten Zähnezahl bestimmt und von der Steuereinheit für den nach der Nullage noch zurücklegenden Schwenkwinkel hinzuaddiert. Nach Erreichen dieses hinzuaddierten Verstellwinkels wird der motorische Antrieb gestoppt. Der Auswurfkrümmer 6 hat die zweite Betriebsstellung erreicht, die der an der vertikalen Längsmittelebene der Erntemaschine 1 gespiegelten ersten Betriebsstellung entspricht.

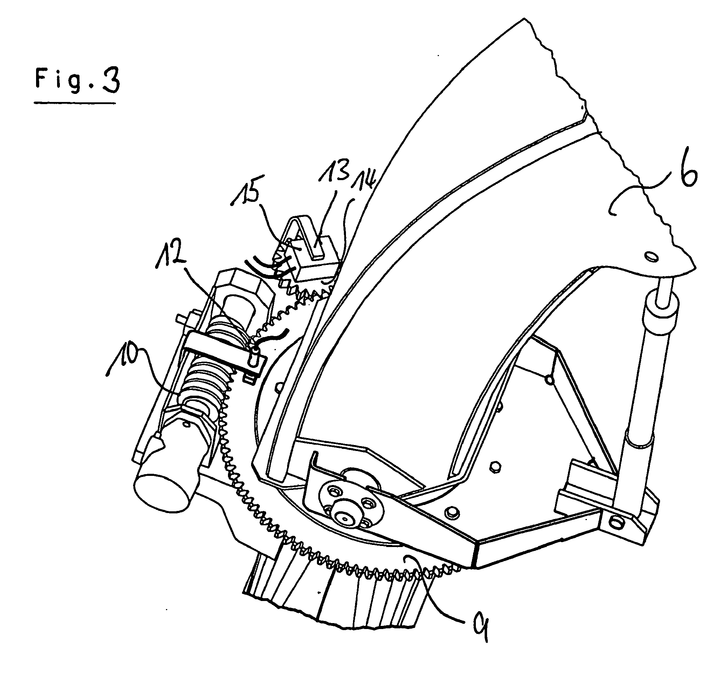

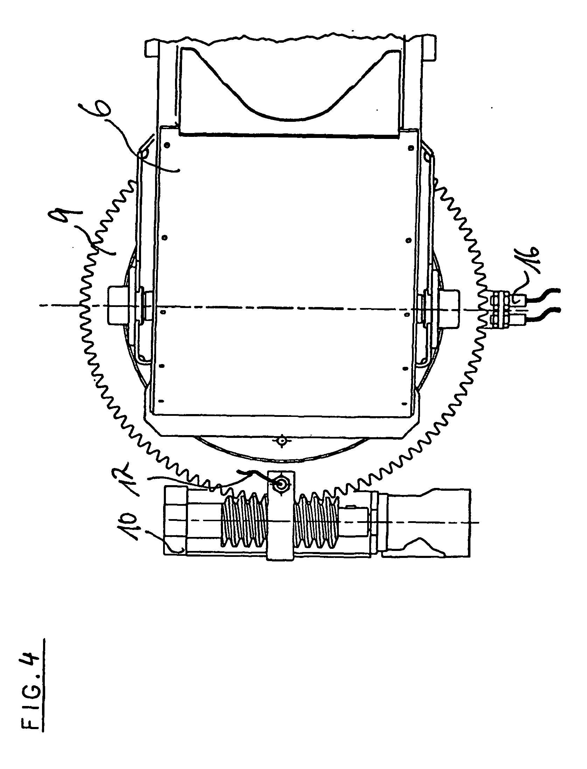

In dem Ausführungsbeispiel nach Fig. 3 ist anstelle des Näherungsschalters 11 eine Einheit 13 vorgesehen, die ein Zahnrad 14 umfaßt, das mit dem Drehkranz 9 kämmt. Die Umdrehungszahl beziehungsweise die Teilumdrehung des Zahnrades 14 wird über die Einheit 15 ermittelt und an die Steuereinheit weitergeleitet. Die Umdrehung beziehungsweise Teilumdrehung des Zahnrades 14 bis zum Erreichen der durch den Sensor 12 ermittelten Nullpunktlage entspricht ansonsten der Arbeitsweise, wie sie für das Ausführungsbeispiel nach Fig. 2 erläutert wurde. In Fig. 4 ist bei ansonsten im wesentlichen gleicher Gestaltung der Näherungsschalter 11 durch einen Doppelnäherungsschalter 16 ersetzt, mit dem zusätzlich die Drehrichtung erfaßt werden kann.

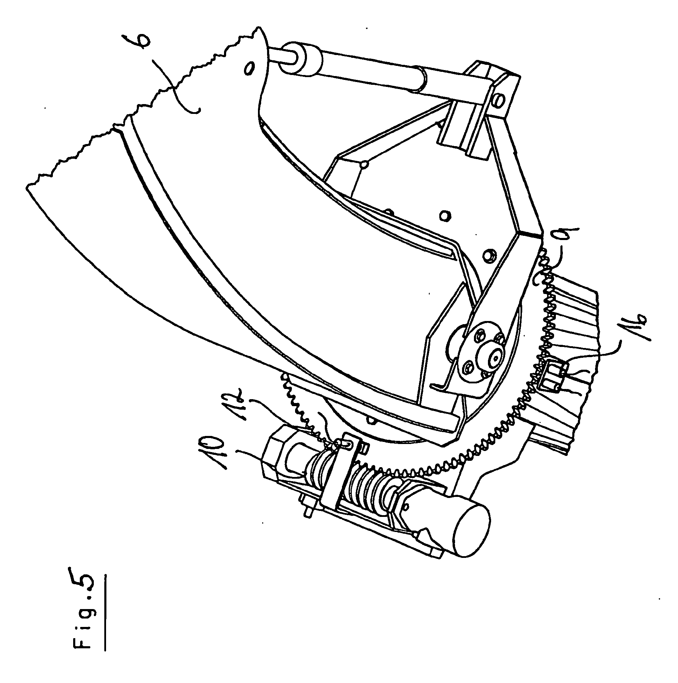

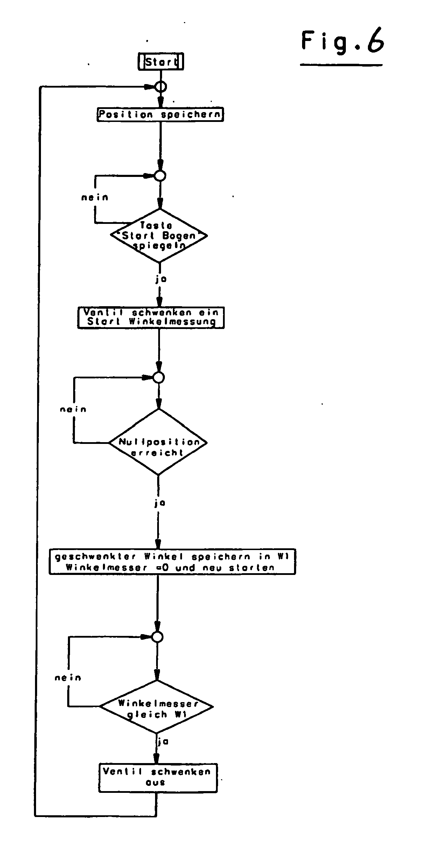

Fig. 5 verdeutlicht noch einmal in einer perspektivischen Ansicht das Ausführungsbeispiel nach Fig. 4. In Fig. 6 ist anhand eines Blockschaltbildes, das die einzelnen Funktionen inhaltlich beschreibt, noch einmal die Wirkungsweise eines Ausführungsbeispiels einer Steuereinheit für eine Erntemaschine nach der Erfindung veranschaulicht.

## Patentansprüche

1. Erntemaschine (1), insbesondere selbstfahrender Feldhäcksler zum Aufnehmen und Häckseln von Mais, Anwelkgras, Grünfutter und dergleichen Erntegut, mit einem Einzugs- und Häckseleinrichtungen nachgeordneten, von einem motorischen Antrieb verschwenkbaren Auswurfkrümer (6) zur Übergabe des Erntegutes in einen Laderaum eines Begleitfahrzeugs, **dadurch gekennzeichnet, daß** der Auswurfkrümmer (6) über den motorischen Antrieb und eine mit diesem gekoppelte Steuervorrichtung bei einem Fahrtrichtungswechsel aus der letzten Betriebsstellung des Auswurfkrümmers (6) vor dem Fahrtrichtungswechsel nach Betätigung einer Starttaste "Bogenspiegeln" der Steuervorrichtung automatisch in eine vorprogrammierbare Betriebsstellung nach dem Fahrtrichtungswechsel verschwenkbar ist, die der an der vertikalen Längsmittelebene der Erntemaschine (1) gespiegelten Betriebsstellung vor dem Fahrtrichtungswechsel entspricht.

2. Erntemaschine nach Anspruch 1, **dadurch gekennzeichnet, daß** die Steuervorrichtung einen Nullage-Sensor (12), einen Winkelmeßzähler (11, 13, 14, 15, 16) sowie eine Soll-/Istwert-Vergleich-Kontrolleinheit umfaßt.

3. Erntemaschine nach Anspruch 1 oder 2 mit einem über einen Drehkranz (9) verschwenkbaren Auswurfkrümmer (6), **dadurch gekennzeichnet, daß** der Winkelmeßzähler (11, 16) als die Zähne des Drehkranzes (9) zählender Näherungsschalter ausgebildet ist.

4. Erntemaschine nach Anspruch 3, **dadurch gekennzeichnet, daß** auf dem Drehkranz (9) des Auswurfkrümmers (6) eine Nullagemarkierung angebracht ist, die über einen Näherungssensor (12) gelesen wird.

5. Erntemaschine nach einem der Ansprüche 2 bis 4, **dadurch gekennzeichnet, daß** der Winkelmeßzähler als ein mit dem Antrieb des Auswurfkrümmers (6) bewegbares Zählwerk (13) ausgebildet ist.

6. Erntemaschine nach Anspruch 5, **dadurch gekennzeichnet, daß** das Zählwerk (13) ein mit dem Drehkranz (9) des Auswurfkrümmers (6) kämmendes Zahnrad (14) aufweist.

## Claims

1. Harvester (1), especially a self-propelled forage harvester, for picking up and chopping maize, wilted grass, green forage and the like crops for harvesting, having a discharge chute (6), positioned downstream of intake and chopping means and able to be pivoted by a motorised drive, for transferring the crops for harvesting into a load-carrying space in an accompanying vehicle, **characterised in that**, when there is a change in the direction of travel, the discharge chute (6), on actuation of a "Mirror the turn" control button belonging to the control arrangement, can be automatically pivoted, by means of the motorised drive and a control arrangement coupled thereto, from the discharge chute's (6) final operating position prior to the change in the direction of travel to a pre-programmable operating position subsequent to the change in the direction of travel which, about the vertical longitudinal centre plane of the harvester (1), is a mirror image of the operating position prior to the change in the direction of travel.

2. Harvester according to claim 1, **characterised in that** the control arrangement comprises a zero-position sensor (12), an angle-measuring counter or meter (11, 13, 14, 15, 16) and a monitoring unit for comparing desired and actual values.

3. Harvester according to claim 1 or 2 having a discharge chute (6) able to be pivoted by means of a slewing gear (9), **characterised in that** the angle-measuring counter or meter (11, 16) is in the form of a proximity switch which counts the teeth of the slewing gear (9).

4. Harvester according to claim 3, **characterised in that** a zero-position marker, which is read by means of a proximity sensor (12), is mounted on the slewing gear (9) of the discharge chute (6).

5. Harvester according to one of claims 2 to 4, **characterised in that** the angle-measuring counter or meter is in the form of a counting mechanism (13) which can be moved by the drive of the discharge chute (6).

6. Harvester according to claim 5, **characterised in that** the counting mechanism (13) has a gearwheel (14) which meshes with the slewing gear (9) of the discharge chute (6).

## Revendications

1. Récolteuse (1), en particulier ramasseuse-hacheuse automotrice pour ramasser et hacher du maïs, du préfané, du fourrage vert et autres produits de récolte analogues, comprenant en aval de dispositifs d'introduction et de hachage, un coude éjecteur (6) pivotant par un entraînement motorisé, et destiné à délivrer le produit récolté dans une chambre de chargement d'un véhicule d'accompagnement,
**caractérisée en ce que**
par l'intermédiaire de l'entraînement motorisé et d'un dispositif de commande couplé à celui-ci, lors d'un changement de direction de marche, le coude éjecteur (6) pivote automatiquement, à partir de sa dernière position de fonctionnement, avant le changement de direction de marche après l'actionnement d'un bouton de démarrage « miroir arqué » du dispositif de commande, dans une position de fonctionnement préprogrammable après le changement de direction de marche, qui correspond à la position de fonctionnement symétrique par rapport au plan médian longitudinal vertical de la récolteuse (1) avant le changement de direction de marche.

2. Récolteuse selon la revendication 1,
**caractérisée en ce que**
le dispositif de commande comprend un capteur de position neutre (12), un compteur de mesure angulaire (11, 13, 14, 15, 16) ainsi qu'une unité de contrôle de comparaison valeur de consigne/valeur réelle.

3. Récolteuse selon la revendication 1 ou 2, comprenant un coude éjecteur (6) pivotant par l'intermédiaire d'une couronne dentée (9),
**caractérisée en ce que**
le compteur de mesure angulaire (11, 16) est un commutateur de proximité qui compte les dents de la couronne dentée (9).

4. Récolteuse selon la revendication 3,
**caractérisée en ce que**
la couronne dentée (9) du coude éjecteur (6) comporte un repère de la position neutre lu par un détecteur de proximité (12).

5. Récolteuse selon l'une des revendications 2 à 4,
**caractérisée en ce que**
le compteur de mesure angulaire est un dispositif de comptage (13) mobile avec l'entraînement du coude éjecteur (6).

6. Récolteuse selon la revendication 5,
**caractérisée en ce que**
le dispositif de comptage (13) présente une roue dentée (14) s'engrenant avec la couronne dentée (9) du coude éjecteur (6).
